# EUROPÄISCHE PATENTSCHRIFT

(11) **EP 0 848 168 B1**
(45) Veröffentlichungstag und Bekanntmachung des Hinweises auf die Patenterteilung: **08.08.2001**
(21) Anmeldenummer: 97118012.0
(22) Anmeldetag: 17.10.1997
(51) Int. Cl.: F16B 5/06, B62D 27/02, B62D 29/04, B60R 19/18

(54) **Axial einstellbares Abstützelement**
Axially adjustable supporting element
Elément de support à réglage axial

(30) Priorität: 13.12.1996 DE 19651918
(43) Veröffentlichungstag der Anmeldung: 17.06.1998
(73) Patentinhaber: AUDI AG, 85045 Ingolstadt (DE)
(72) Erfinder: Kugler, Peter, 86609 Donauörth (DE); Mederle, Günther, 86663 Bäumenheim (DE)
(74) Vertreter: Engelhardt, Harald

(56) Entgegenhaltungen:
- US-A- 4 573 733
- US-A- 4 682 906

## Beschreibung

Die Erfindung betrifft ein axial einstellbares Abstützelement zur gegenseitigen Abstützung zweier im Abstand liegender Fahrzeugbauteile nach dem Oberbegriff des Anspruchs 1.

Derartige Abstützelemente müssen einen Relativabstand zwischen den Bauteilen überbrücken und eine hinreichende Abstützung sicherstellen. Zur Überbrückung eines Relativabstands sowie zum Herstellen einer festen Verbindung zwischen zwei Fahrzeugbauteilen sind im Karosseriebau Schraubverbindungen (DE 42 28 625) bekannt, bei denen ein Schraubbolzen mit einer bestimmten Drehrichtung und einem hohen Reibmoment durch ein zweites Bauteil hindurch in eine Gewindehülse eingreift. Die Gewindehülse ist ihrerseits mit einem gegenläufigen, leichtgängigeren Gewinde in ein fest mit dem ersten Bauteil verbundenes Gewindeteil eingeschraubt. Durch die unterschiedlichen Reibmomente wird zuerst die Gewindehülse zur Überbrückung des Relativabstands bis zur Anlage am zweiten Bauteil herausgedreht, bevor sich der Schraubbolzen durch fortgesetztes Drehen mit dessen Schraubenkopf am zweiten Bauteil abstützt und die Schraubverbindung festgezogen werden kann.

Der Schraubenkopf muß zum Anziehen der Schraubverbindung an einer Bauteilaußenseite frei zugänglich sein. Für Einbausituationen, die keinen solchen freien Zugang aufweisen oder wo ein Schraubenkopf nicht zulässig ist, z.B. an der Fahrzeugaußenseite, sind derartige Schraubverbindungen zur Abstützung der beiden Bauteile ungeeignet.

Ein gattungsgemäßes Abstützelement in der Form einer zweiteiligen Distanzscheibe mit Schraubverbindung ist aus der DE 40 22 299 bekannt. Dieses kippstabile Abstützelement besteht aus einem ersten und zweiten, gegeneinander um die Axialrichtung verdrehbaren Stützteil als Distanzscheibenteil mit jeweils endseitigen Abstützflächen. Das erste und zweite Stützteil liegen an einander zugekehrten Anlageflächen an. Diese Anlageflächen sind Schraubflächen gleicher Ganghöhe bezogen auf die Axialrichtung. Bei einer Verdrehung der Stützteile ist der axiale Abstützabstand einstellbar. Die Ganghöhe der Schraubflächen ist nur so groß, daß bei einer axialen Belastung zwischen den Stützteilen Selbsthemmung auftritt. Die Stützteile als Distanzscheibenteile weisen drei in Axialrichtung gesehen konzentrisch liegende Kreisringe als Anlageflächen auf, deren Rampen wiederum in Umfangsrichtung versetzt liegen. Die Kreisringe weisen eine gleiche radiale Breite auf, wobei die Rampen in einem gleichmäßigen Winkelabstand voneinander liegen. Damit werden die Distanzscheibenteile radial festgelegt.

Es besteht nun das Problem, daß sich die zu verbindenen Bauteile an der Abstützstelle oftmals großflächig oder verwinkelt überlappen und eine einfache Einbringung der Distanzscheiben nicht möglich ist. Ein Werker benötigt dabei zur Montage beide Hände, da er gleichzeitig einen Gewindebolzen einführen und die Distanzscheibe positionieren muß. Einen zusätzlichen Arbeitsgang stellt die Verstellung der Distanzscheiben auf den Relativabstand der beiden Bauteile dar. Dies führt zu einer aufwendigen Montage. Für nicht mit der Hand zugängliche Einbausituationen ist die Verwendung derartiger Distanzscheiben nicht möglich. Zudem ist dieses Abstützelement als Distanzscheibe dort nicht einsetzbar, wo ein Schraubenkopf an der Außenseite eines Bauteils nicht zulässig ist.

Aufgabe der Erfindung ist es daher, ein Abstützelement zu schaffen, mit dem auf einfache Weise zwischen zwei Fahrzeugbauteilen ein Relativabstand zur gegenseitigen Abstützung der Fahrzeugbauteile überbrückbar ist, wo der Relativabstand nicht oder schwer zugänglich ist und/oder an einer Bauteilaußenseite keine Elemente der Abstützung sichtbar sein sollen.

Diese Aufgabe wird mit den Merkmalen des Anspruchs 1 gelöst.

Nach Anspruch 1 ist zwischen dem ersten und zweiten Stützteil eine Drehfeder zur Aufbringung einer Vorspannung angeordnet. In einer Grundstellung sind das erste und zweite Stützteil bei minimalem Einstellungsabstand der Anlageflächen der Stützteile über eine Betätigungseinrichtung verdrehfest und lösbar verbunden. Nach der Einbringung des Abstützelements zwischen die beiden abzustützenden Bauteile und dem Lösen der verdrehfesten Verbindung der beiden Stützteile mittels der Betätigungseinrichtung verdreht die Drehfeder die beiden Stützteile zur Vergrößerung des axialen Einstellabstands so lange, bis die Abstützflächen an den Bauteilen anliegen.

Dadurch ist eine selbsttätige Anpassung des Abstützelementes an den jeweiligen Relativabstand zwischen zwei Bauteilen nur durch das einfache Betätigen der Betätigungseinrichtung möglich. Die Stützteile laufen aufgrund der Vorspannung aus der Grundstellung von selbst mit ihren Abstützflächen gegen die Bauteile. Eine Einstellung des Abstützelementes auf den jeweiligen Relativabstand zwischen den beiden abzustützenden Bauteilen mit der Hand erübrigt sich. Dadurch kann das erfindungsgemäße Abstützelement im Gegensatz zu den vorstehend erläuterten, bekannten Schraubverbindungen auch an solchen Orten eingebaut werden, die keinen freien Zugang zum Festziehen der Schraubverbindung aufweisen oder wo an einer Bauteilaußenseite keine Elemente der Abstützung sichtbar sein sollen. Insbesondere können mit einem erfindungsgemäßen Abstützelement solche Stellen an beabstandeten Fahrzeugbauteilen abgestützt werden, die nicht mit einer Schraubverbindung miteinander verbunden werden müssen, sondern lediglich gegen Einknicken im Belastungsfall gesichert werden sollen.

Sobald die Stützteile nach dem Betätigen der Betätigungseinrichtung mit ihren Abstützflächen gegen die Bauteile gelaufen sind und das Abstützelement dadurch eine axiale Kraft aufnimmt, tritt die Selbsthemmung zwischen den Stützteilen ein. Ohne Belastung der Bauteile verhindert die Drehfeder ein Zurücklaufen der Stützteile, so daß die Abstützung weiterhin sichergestellt ist. Die Vorspannung der jeweiligen Drehfeder muß so gewählt sein, daß das Verdrehmoment der Drehfeder größer ist als das Reibmoment zwischen den jeweiligen Stützteilen, um diese aus der Grundstellung in die jeweilige Abstützstellung zu verdrehen. Das Abstützelement ist in seinem Verdrehweg zwischen den beiden Stützteilen dem jeweiligen zu überwindenden axialen Einstellabstand zwischen den Bauteilen angepaßt ausgebildet.

Die Stützteile können beispielsweise flächige Distanzscheiben entsprechend dem eingangs erwähnten Stand der Technik mit in Axialrichtung gesehen konzentrisch liegenden Kreisringen als Anlageflächen sein, deren Rampen in Umfangsrichtung versetzt liegen. Diese Distanzscheiben können dann nach dem Betätigen der Betätigungseinrichtung mittels der Drehfeder aus der Grundstellung in die Abstützstellung zur Anlage an den Bauteilen gebracht werden. In einer nach Anspruch 2 bevorzugten Ausführungsform weist das Abstützelement jedoch einen dosenförmigen Aufbau aus Metall und/oder Kunststoff auf. Das Abstützelement umfaßt dabei einen zylindrischen Dosendeckel als erstes Stützteil mit einem Innengewinde und ein entsprechend zugeordnetes, kolbenförmiges Dosenunterteil mit einem Außengewinde, das in den Dosendeckel eingeschraubt ist. Die Dosendeckelaußenfläche bildet eine erste Stützfläche und der Dosenunterteilboden eine zweite Stützfläche. Dabei stellen die Gewindegänge des Innengewindes und des Außengewindes die gegenseitigen Anlageflächen dar.

Das Innen- und Außengewinde haben eine solche Ganghöhe, daß bei einer axialen Belastung zwischen den Stützteilen Selbsthemmung auftritt. Entsprechend dem jeweiligen Relativabstand zwischen zwei abzustützenden Bauteilen ergibt sich die Längendimensionierung des Dosendeckels und des Dosenunterteils. Das Gewinde ist dabei bevorzugt mit einer solchen Einschraublänge ausgebildet, daß das Dosenunterteil und der Dosendeckel in der Abstützstellung über mehrere Gewindegänge miteinander verbunden sind. Dadurch ergibt sich eine stabile Abstützung über mehrere, eine Axialkraft aufnehmende Gewindegänge und somit auch ein günstiger Kraftverlauf in dem Abstützelement.

Nach Anspruch 3 ist im Innenbereich des dosenförmigen Abstützelements als Drehfeder eine ebene Spiralfeder angeordnet, wobei deren jeweilige Enden mit je einem Stützteil verbunden sind. Diese ebene Spiralfeder steht sowohl in der Grundstellung bei minimalem Einstellabstand als auch bei maximal möglichem Einstellabstand in der Anlage der Abstützflächen an den gegenseitig abzustützenden Fahrzeugbauteilen unter Vorspannung. In einer alternativen Ausführungsform kann auch eine Federzunge als Drehfeder ausreichend sein oder anstatt einer ebenen Spiralfeder auch eine gewundene Schraubenbiegefeder als Drehfeder verwendet werden, deren Schenkelenden ebenfalls jeweils mit je einem Stützteil verbunden sind.

Nach Anspruch 4 ragt in allen Einstellungspositionen ein Zentralzapfen von der Dosenbodenwand des Dosenunterteils ausgehend durch eine entsprechende Führungsöffnung der Dosendeckelwand des Dosendeckels. Die Spiralfeder verläuft um diesen Zentralzapfen und ist mit ihrem inneren Ende mit dem Zentralzapfen verbunden. Mit diesem Zentralzapfen ist bei einer nicht gleichmäßigen Krafteinleitung sichergestellt, daß das Dosenunterteil nicht gegen den Dosendeckel verkippbar bzw. verkantbar ist. Dadurch läßt sich eine Beschädigung der Gewindegänge durch ungleichmäßige Lastverteilung vermeiden.

Nach Anspruch 5 ragt ein von der Dosendeckelwand ausgehender umlaufender Bund in Höhe der Spiralfederebene in den Innenbereich des dosenförmigen Abstützelements, an dem das äußere Ende der Spiralfeder festgelegt ist. Dadurch wird eine Art Käfig für die Spiralfeder ausgebildet, der die Spiralfeder in der Grundstellung aufnimmt und vom Gewindebereich abtrennt. Alternativ kann anstatt eines umlaufenden Bundes beispielsweise auch ein Stift von der Dosendeckelwand ausgehend in den Innenbereich des Abstützelements ragen, an dem das äußere Ende der Spiralfeder festgelegt ist.

Nach Anspruch 6 sind an einer Abstützfläche eines Stützteils eine oder mehrere Anschlußeinrichtungen, bevorzugt Clipelemente, zur Verbindung mit einem angrenzenden Fahrzeugbauteil angeordnet. In einer bevorzugten Ausführungsform sind diese Clipelemente an der Abstützfläche des Dosendeckels angeordnet und in eine entsprechende Aufnahme an einem der abzustützenden Fahrzeugbauteile einclipsbar. Damit ist das Abstützelement bereits mit einer Abstützfläche an einem Fahrzeugbauteil zur Anlage gebracht. Das Abstützelement ist dadurch bereits mit dem Zusammenbau an die gewünschte Abstützstelle bringbar und muß nicht erst nachträglich an dieser Stelle eingebracht werden. Nach dem Betätigen der Betätigungseinrichtung verdreht die Drehfeder schließlich den Dosenunterteil so lange, bis er mit seiner Abstützfläche an dem zweiten abzustützenden Bauteil zur Anlage kommt.

Nach Anspruch 7 ist die Betätigungseinrichtung eine Fernbetätigung. Dies ist bevorzugt bei einer Einbringung des Abstützelements an von außen unzugänglichen Stellen von Vorteil, beispielsweise wenn sich im Karosseriebau die abzustützenden Fahrzeugbauteile großflächig oder verwinkelt überlappen. Durch die Fernbetätigung kann dann die Verbindung zwischen den beiden Stützteilen auf einfache Weise ohne direkten Zugriff zu der Abstützstelle haben zu müssen, aus der Entfernung bequem gelöst werden, wobei die Drehfeder die Stützteile aus der Grundstellung heraus bis zur Anlage an den abzustützenden Fahrzeugbauteilen verdreht.

In einer konkreten Ausführungsform sind nach Anspruch 8 die lösbare Verbindung zwischen den Stützteilen und die Betätigungseinrichtung durch zwei fluchtend ausgerichtete, randseitige Vorsprünge mit Aufnahmeschlitzen gebildet. In diese Aufnahmeschlitze ist ein Betätigungselement eingesetzt, das aus einem Arretierglied mit einer Sollbruchstelle und einem angeschlossenen Zugband aufgebaut ist. Die Sollbruchstelle bricht bei einer vorbestimmten Zugbelastung und gibt die Stützteile für eine gegenseitige Verdrehung frei. Am Arretierglied des Betätigungselements ist nach Anspruch 9 die Sollbruchstelle durch eine Materialverdünnung mit einem anschließenden, endseitigen Abscherelement als Abstützung an einem der randseitigen Vorsprünge ausgebildet. Entsprechend ist an der anderen Endseite des Betätigungselements am Zugband ein quergestellter Handgriff angeformt.

Mit Anspruch 10 ist ein konkreter Einbaufall in einem Kraftfahrzeug beansprucht. Dort sind die im Abstand liegenden, abzustützenden Bauteile jeweils ein Stoßfängerquerträger und ein Stoßfängerüberzug. Zwischen der Oberseite des Stoßfängerquerträgers und der benachbarten Unterseite des Stoßfängerüberzugs sind ein oder mehrere Abstützelemente als Einstellelemente angeordnet. Die Abstützelemente können dabei direkt zwischen der Oberseite des Stoßfängerquerträgers und der benachbarten Unterseite des Stoßfängerüberzugs eingebracht sein oder aber auch zwischen der Oberseite des Stoßfängerquerträgers diese Unterseite des Stoßfängerüberzugs über Zwischenteile mittelbar abstützen.

Anhand der Zeichnungen wird eine Ausführungsform der Erfindung näher erläutert.

Es zeigen:
- Fig. 1: eine perspektivische Ansicht von Teilen eines Abstützelementes ohne Spiralfeder im nicht zusammengebauten Zustand,
- Fig. 2: eine Seitenansicht eines Abstützelements in der Grundstellung,
- Fig. 3: eine Schnittdarstellung entlang der Linie A-A der Fig. 2,
- Fig. 4: eine schematische Darstellung eines möglichen Einbauortes eines Abstützelementes zwischen zwei abzustützenden Fahrzeugbauteilen in der Grundstellung, und
- Fig. 5: eine schematische Darstellung eines möglichen Einbauortes eines Abstützelementes zwischen zwei abzustützenden Fahrzeugbauteilen in der Abstützstellung.

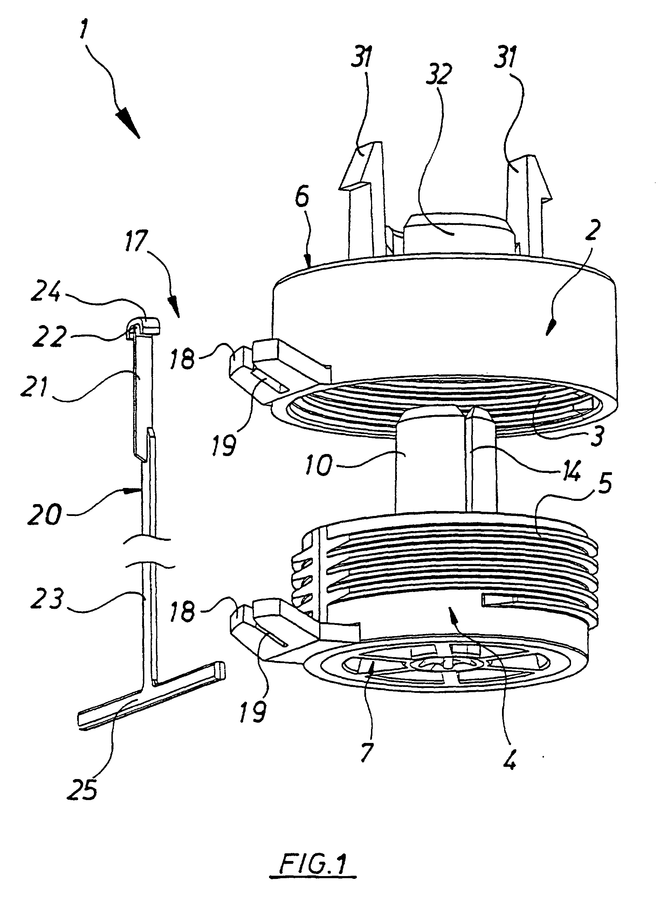

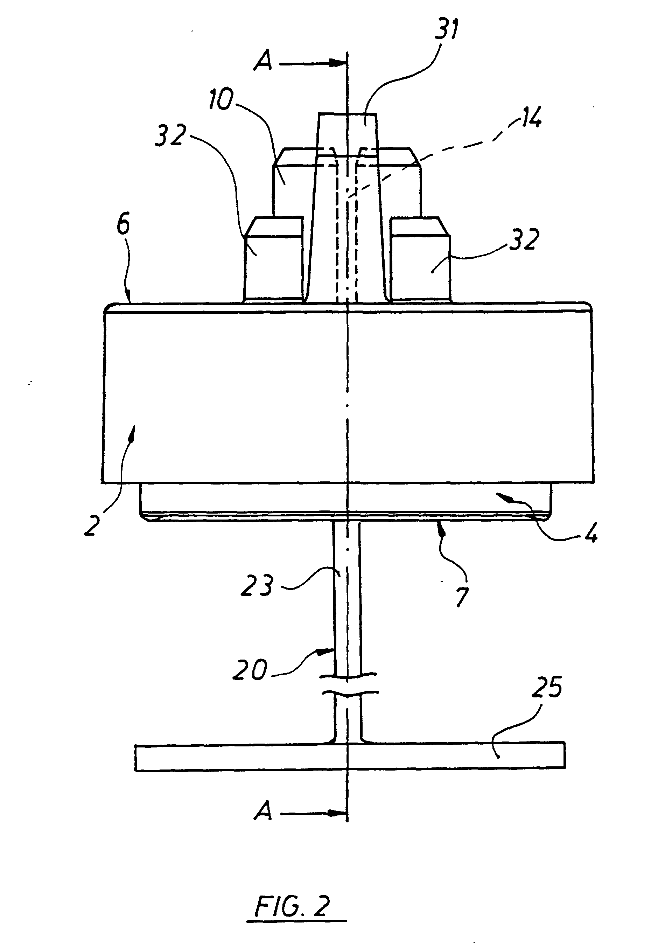

In der Fig. 1 ist eine perspektivische Darstellung eines Abstützelements 1 im nicht zusammengebauten Zustand gezeigt. Dieses Abstützelement 1 umfaßt einen zylindrischen Dosendeckel 2 als erstes Stützteil, der ein Innengewinde 3 als erste Anlagefläche aufweist, und ein entsprechend zugeordnetes, kolbenförmiges Dosenunterteil 4, das ein Außengewinde 5 als zweite Anlagefläche aufweist. In der Fig. 2 ist die Grundstellung gezeigt, in der das Dosenunterteil 4 in den Dosendeckel 2 eingeschraubt ist. Die Dosendeckelaußenfläche bildet eine erste Abstützfläche 6 und der Dosenunterteilboden bildet eine zweite Abstützfläche 7. Die die gegenseitigen Anlageflächen darstellenden Gewindegänge des Innengewindes 3 und des Außengewindes 4 sind Schraubflächen mit einer derartigen Ganghöhe, daß bei einer axialen Belastung zwischen dem Dosendeckel 2 und dem Dosenunterteil 4 Selbsthemmung auftritt.

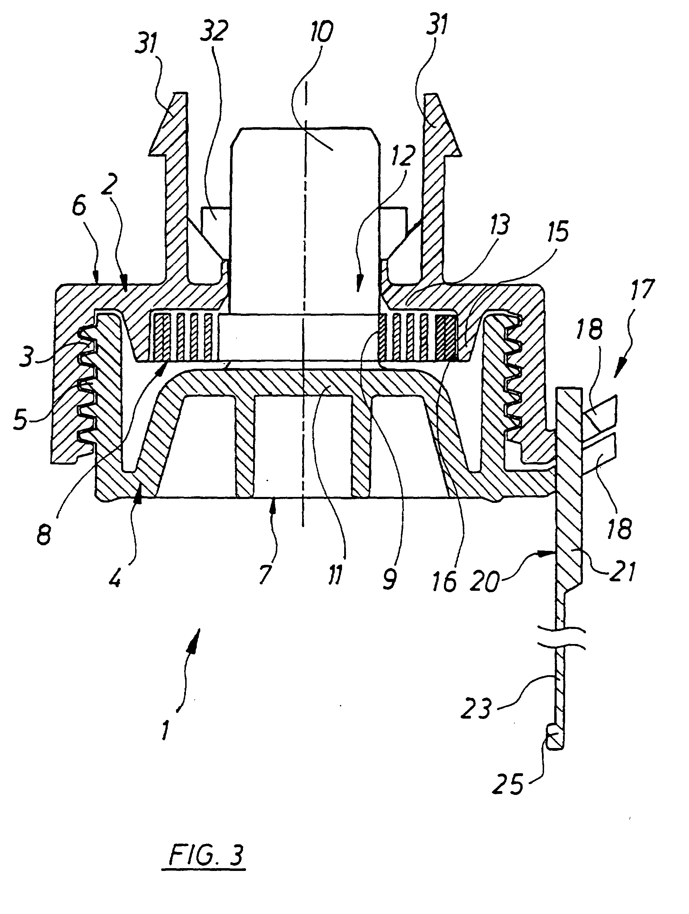

Wie dies der Fig. 3 zu entnehmen ist, die einen Schnitt einen entlang der Linie A-A der Fig. 2 darstellt, ist zwischen dem Dosendeckel 2 und dem Dosenunterteil 4 eine ebene, bandförmige Spiralfeder 8 als Drehfeder zur Aufbringung einer Vorspannung angeordnet. Diese Spiralfeder 8 ist mit ihrem inneren Ende 9 mit einem Zentralzapfen 10 verbunden, der von der Dosenbodenwand 11 des Dosenunterteils 4 ausgehend durch eine entsprechende Führungsöffnung 12 in der Dosendeckelwand 13 des Dosendeckels 2 ragt. Aus den Fig. 1 bis 3 ist ersichtlich, daß an der Dosendeckelaußenfläche 6 zwei Clipelemente 31 zur Verbindung des Dosendeckels 2 mit einem angrenzenden Fahrzeugbauteil sowie ferner zwei Zapfenführungselemente 32 angeordnet sind.

Wie dies in der Fig. 2 strichliert eingezeichnet ist, weist der Zentralzapfen 10 einen durchgehenden Schlitzbereich 14 auf, zwischen dem das innere Ende 9 der Spiralfeder 8 gehalten ist (vgl. dazu auch Fig. 3).

Ferner ist in der Darstellung der Fig. 3 ein von der Dosendeckelwand 13 ausgehender, umlaufender Bund 15 dargestellt, der in der Höhe der Spiralfeder 8 in den Innenbereich des dosenförmigen Abstützelements 1 ragt. Die Spiralfeder 8 verläuft dabei spiralförmig um den Zentralzapfen 10 herum und ist mit ihrem äußeren Ende 16 am Bund 15 festgelegt.

Der Dosendeckel 2 und das Dosenunterteil 4 sind in einer in den Fig. 2 und 3 dargestellten Grundstellung bei minimalem axialen Einstellungsabstand über eine Betätigungseinrichtung 17 verdrehfest und lösbar miteinander verbunden. In dieser Grundstellung stehen der Dosendeckel 2 und das Dosenunterteil 4 durch die Spiralfeder 8 unter der maximalen Vorspannung.

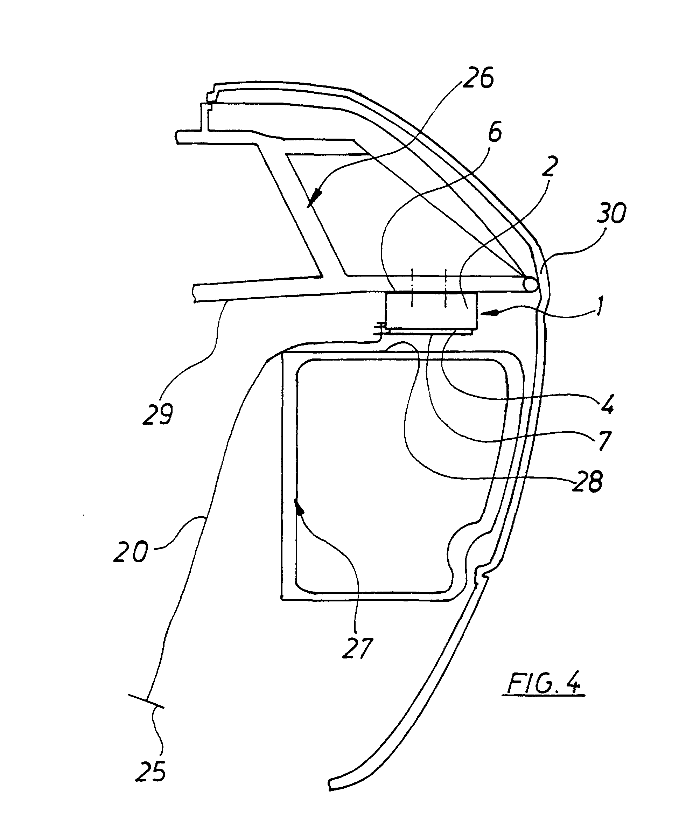

Die Betätigungseinrichtung 17 ist eine Fernbetätigung, die entfernt vom Abstützort betätigt werden kann (vgl. dazu Fig. 4). Wie dies aus den Fig. 1 und 3 ersichtlich ist, umfaßt die Betätigungseinrichtung 17 an dem Dosendeckel 2 bzw. dem Dosenunterteil 4 zwei fluchtend ausgerichtete, randseitige Vorsprünge 18 mit Aufnahmeschlitzen 19, in die ein Betätigungselement 20 eingesetzt ist. Dieses Betätigungselement 20 ist aus einem Arretierglied 21 mit einer Sollbruchstelle 22 und einem daran angeschlossenen Zugband 23 aufgebaut, wobei die Sollbruchstelle 22 bei einer vorbestimmten Zugbelastung bricht und den Dosendeckel 2 und das Dosenunterteil 4 für eine gegenseitige Verdrehung freigibt.

Die Sollbruchstellung 22 am Arretierglied 21 des Betätigungselements 20 ist durch eine Materialverdünnung mit einem anschließenden, endseitigen Abscherelement 24 zur Abstützung an dem randseitigen Vorsprung 18 an dem Dosendeckel 2 gebildet. An der anderen, abstützortfernen Endseite des Betätigungselements 20 ist am Zugband 23 ein quergestellter Handgriff 25 angeformt.

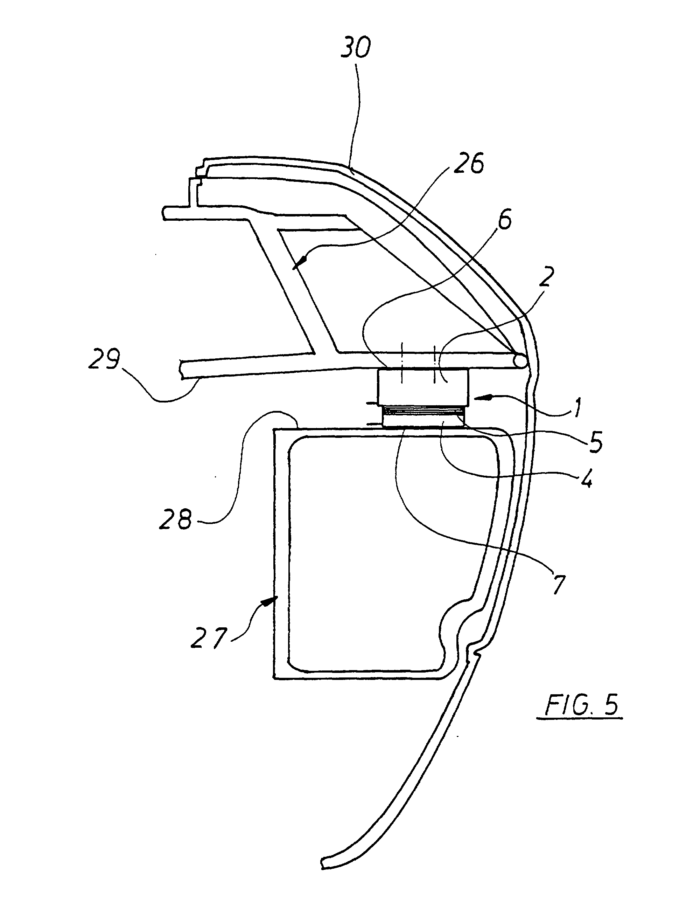

Die Funktion des Abstützelements 1 wird nachfolgend anhand einer in den Fig. 4 und 5 dargestellten, konkreten Einbausituation zwischen zwei Fahrzeugbauteilen näher erläutert:

Hierbei ist zur gegenseitigen Abstützung eines im Abstand zu einem Zwischenteil 26 liegenden Stoßfängerquerträgers 27 ein Abstützelement 1 als Einstellelement zwischen der Oberseite 28 des Stoßfängerquerträgers 27 und der benachbarten Unterseite 29 des Zwischenteils 26 zur mittelbaren Abstützung eines Stoßfängerüberzugs 30 angeordnet.

In der Fig. 4 ist das Abstützelement 1 in der Grundstellung über die hier nicht dargestellten Clipelemente 31 an der Dosendeckelaußenfläche 6 in die Unterseite 29 des Zwischenteils 26 eingeclipst. Das Betätigungselement 20 ist hierbei in die Aufnahmeschlitze 19 der Vorsprünge 18 eingesetzt, wobei die Spiralfeder 8 die maximale Vorspannung aufweist. Das Zugband 23 des Betätigungselements 20 ist hier so lang ausgebildet, daß es von einem Werker auf bequeme Weise entfernt vom Abstützort ergreifbar ist. Durch das Anziehen an dem Zugband 23 durch den Werker wird das Abscherelement 24 an der Sollbruchstelle 22 am Vorsprung 18 an dem Dosendeckel 2 abgeschert und damit die Verbindung des Dosendeckels 2 mit dem Dosenunterteil 4 gelöst. Dadurch verdreht die Spiralfeder 8 das Dosenunterteil 4 aus der Grundstellung in die in der Fig. 5 dargestellte Abstützposition. In dieser Abstützposition wirkt bei einer Belastung auf den Stoßfängerüberzug 30 eine Axialkraft auf das Abstützelement 1, wobei zwischen dem Dosendeckel 2 und dem Dosenunterteil 4 Selbsthemmung auftritt.

## Patentansprüche

1. Axial einstellbares Abstützelement zur gegenseitigen Abstützung zweier im Abstand liegender Fahrzeugbauteile,
bestehend aus einem ersten und zweiten gegeneinander um die Axialrichtung verdrehbaren Stützteil mit jeweils endseitigen Abstützflächen,
wobei das erste und zweite Stützteil an einander zugekehrten Anlageflächen anliegen, und die Anlageflächen Schraubenflächen gleicher Ganghöhe bezogen auf die Axialrichtung sind, so daß bei einer Verdrehung der Stützteile der axiale Abstützabstand veränderbar ist und die Ganghöhe der Schraubenflächen nur so groß ist, daß bei einer axialen Belastung zwischen den Stützteilen Selbsthemmung auftritt,
dadurch gekennzeichnet,
daß zwischen dem ersten Stützteil (2) und dem zweiten Stützteil (4) eine Drehfeder (8) zur Aufbringung einer Vorspannung angeordnet ist,
daß das erste Stützteil (2) und das zweite Stützteil (4) in einer Grundstellung bei minimalem Einstellungsabstand der Anlageflächen (3, 5) der Stützteile (2, 4) über eine Betätigungseinrichtung (17) verdrehfest und lösbar verbunden sind, dergestalt,
daß nach Einbringung des Abstützelements (1) zwischen die beiden abzustützenden Bauteile (26, 27) und Lösen der Verbindung der Stützteile (2, 4) mittels der Betätigungseinrichtung (17), die Drehfeder (8) die beiden Stützteile (2, 4) so lange zur Vergrößerung des axialen Einstellabstandes verdreht, bis die Abstützflächen (6, 7) an den Bauteilen (26, 27) anliegen.

2. Axial einstellbares Abstützelement nach Anspruch 1, dadurch gekennzeichnet, daß das Abstützelement (1) dosenförmig aufgebaut ist aus einem zylindrischen Dosendeckel (2) als erstem Stützteil mit einem Innengewinde (3) und aus einem zugeordneten, kolbenförmigen Dosenunterteil (4) mit einem Außengewinde (5), das in den Dosendeckel (2) eingeschraubt ist, wobei die Dosendeckelaußenfläche die erste Abstützfläche (6) und der Dosenunterteilboden die zweite Abstützfläche (7) bilden und die Gewindegänge des Innengewindes (3) und Außengewindes (5) die gegenseitigen Anlageflächen darstellen.

3. Axial einstellbares Abstützelement nach Anspruch 2, dadurch gekennzeichnet, daß im Innenbereich des dosenförmigen Abstützelements (1) als Drehfeder (8) eine ebene Spiralfeder angeordnet ist, deren jeweilige Enden (9, 16) mit je einem Stützteil (2, 4) verbunden sind und die sowohl in der Grundstellung bei minimalem Einstellabstand als auch bei maximal möglichem Einstellabstand unter Vorspannung steht.

4. Axial einstellbares Abstützelement nach Anspruch 3, dadurch gekennzeichnet,
daß ausgehend von der Dosenbodenwand (11) des Dosenunterteils (4) ein Zentralzapfen (10) durch eine entsprechende Führungsöffnung (12) der Dosendeckelwand (13) des Dosendeckels (2) in allen Einstellungspositionen ragt, und
daß die Spiralfeder (8) um den Zentralzapfen (10) verläuft und mit ihrem inneren Ende (9) mit dem Zentralzapfen (10) verbunden ist.

5. Axial einstellbares Abstützelement nach Anspruch 4, dadurch gekennzeichnet,
daß ausgehend von der Dosendeckelwand (13) ein umlaufender Bund (15) in den Innenbereich des dosenförmigen Abstützelements (1) in Höhe der Spiralfederebene ragt, und
daß das äußere Ende (16) der Spiralfeder (8) am Bund (15) festgelegt ist

6. Axial einstellbares Abstützelement nach einem der Ansprüche 1 bis 5, dadurch gekennzeichnet, daß an einer Abstützfläche (6, 7) eines Stützteils (2, 4) eine Anschlußeinrichtung (31), bevorzugt Clipelemente zur Verbindung mit einem angrenzenden Bauteil (26) angeordnet ist.

7. Axial einstellbares Abstützelement nach einem der Ansprüche 1 bis 6, dadurch gekennzeichnet, daß die Betätigungseinrichtung (17) eine Fernbetätigung ist.

8. Axial einstellbares Abstützelement nach einem der Ansprüche 1 bis 6, dadurch gekennzeichnet, daß die lösbare Verbindung zwischen den Stützteilen (2, 4) und die Betätigungseinrichtung (17) durch zwei fluchtend ausgerichtete, randseitige Vorsprünge (18) mit Aufnahmeschlitzen (19) gebildet sind, in die ein Betätigungselement (20) aus einem Arretierglied (21) mit einer Sollbruchstelle (22) und einem angeschlossenen Zugband (23) eingesetzt ist, wobei die Sollbruchstelle (22) bei einer vorbestimmten Zugbelastung bricht und die Stützteile (2, 4) für eine gegenseitige Verdrehung freigibt.

9. Axial einstellbares Abstützelement nach Anspruch 8, dadurch gekennzeichnet, daß am Arretierglied (21) des Betätigungselements (20) die Sollbruchstelle (22) durch eine Materialverdünnung mit einem anschließenden, endseitigen Abscherelement (24) als Abstützung an einem randseitigen Vorsprung (18) gebildet ist und an der anderen Endseite des Betätigungselements (20) am Zugband (23) ein quergestellter Handgriff (25) angeformt ist.

10. Axial einstellbares Abstützelement nach einem der Ansprüche 1 bis 9, dadurch gekennzeichnet, daß die im Abstand liegenden, abzustützenden Bauteile jeweils ein Stoßfängerquerträger (27) und ein Stoßfängerüberzug (30) sind und ein oder mehrere Abstützelemente (1) als Einstellelemente zwischen der Oberseite (28) des Stoßfängerquerträgers (27) und der benachbarten Unterseite des Stoßfängerüberzugs (30) für eine unmittelbare oder mittelbare Abstützung über Zwischenteile (26) angeordnet sind.

## Claims

1. Axially adjustable supporting element for mutually supporting two vehicle components which are set spaced apart,
consisting of a first and a second support which are adapted to be twisted relative to one another about the axial direction and have respective support surfaces,
the first and second supports bearing against mutually facing contact surfaces, and the contact surfaces being screw surfaces with identical pitch in relation to the axial direction, thereby making it possible to vary the axial supporting distance upon twisting the supports, and the pitch of the screw surfaces only being large enough for automatic interlocking between the supports to occur in the event of an axial loading,
characterised in that
arranged between the first support (2) and the second support (4) is a torsion spring (8) for producing an initial tension,
in a default setting with the contact surfaces (3, 5) of the supports (2, 4) adjusted to be a minimum distance apart, the first support (2) and the second support (4) are connected removably and in a manner locked against torsion by way of an operating device (17), such that
once the supporting element (1) has been introduced between the two components (26, 27) to be supported, and once the connection between the supports (2,4) has been removed by means of the operating device (17), to increase the axial adjusted distance the torsion spring (8) twists the two supports (2, 4) until the supporting surfaces (6, 7) bear against the components (26, 27).

2. Axially adjustable supporting element according to claim 1, characterised in that the supporting element (1) is constructed in the shape of a can from a cylindrical can lid (2) as the first support with an internal thread (3) and from an associated, pistonshaped can bottom portion (4) with an external thread (5) which is screwed into the can lid (2), the outer surface of the can lid forming the first supporting surface (6) and the base of the can's bottom portion forming the second supporting surface (7), and the turns of the inner thread (3) and of the outer thread (5) constituting the mutual contact surfaces.

3. Axially adjustable supporting element according to claim 2, characterised in that as the torsion spring (8) there is arranged in the interior of the canshaped supporting element (1) a plane spiral spring whose respective extremities (9, 16) are connected to a support (2, 4) in each case and which is under initial tension both in the default setting in which the adjusted distance is minimal and in the case of the maximum possible adjusted distance.

4. Axially adjustable supporting element according to claim 3, characterised in that
starting from the base wall (11) of the can's bottom portion (4) a central pin (10) projects through a corresponding guide opening (12) in the wall (13) of the can lid (2) in all positions of adjustment, and the spiral spring (8) runs around the central pin (10) and is connected by its inner extremity (9) to the central pin (10).

5. Axially adjustable supporting element according to claim 4, characterised in that
starting from the can lid wall (13) a peripheral collar (15) projects into the interior of the canshaped supporting element (1) at the level of the spiral spring's plane, and
the outer extremity (16) of the spiral spring (8) is fixed on the collar (15).

6. Axially adjustable supporting element according to any of claims 1 to 5, characterised in that arranged on one supporting surface (6, 7) of a support (2, 4) is a connecting device (31), preferably clip elements for connection to an adjacent component (26).

7. Axially adjustable supporting element according to any of claims 1 to 6, characterised in that the operating device (17) is a remote-control device.

8. Axially adjustable supporting element according to any of claims 1 to 6, characterised in that the removable connection between the supports (2, 4), as well as the operating device (17), are formed by two flush peripheral projections (18) with locating slots (19) into which is inserted an operating element (20) comprising a locking member (21) with a nominal rupture point (22) and a linked tension strap (23), the nominal rupture point (22) breaking under a predetermined tensile strain and releasing the supports (2, 4) for mutual torsion.

9. Axially adjustable supporting element according to claim 8, characterised in that on the locking member (21) of the operating element (20) the nominal rupture point (22) is formed by a thinner area of material having a contiguous, endwise shearing element (24) as the support at a peripheral projection (18) and on the other end face of the operating element (20) a transversely positioned handle (25) is moulded on the tension strap (23).

10. Axially adjustable supporting element according to any of claims 1 to 9, characterised in that the spaced components which are to be supported are respectively a bumper transverse member (27) and a bumper cover (30), and one or more supporting elements (1) are arranged as adjustment elements between the top face (28) of the bumper transverse member (27) and the adjacent underside of the bumper cover (30), for direct or indirect support via intermediate parts (26).

## Revendications

1. Élément de support à réglage axial pour le soutien mutuel de deux composants de carrosserie placés à distance l'un de l'autre,
constitué d'une première partie support et d'une deuxième partie support, susceptible d'être tournées l'une par rapport à l'autre autour de la direction axiale, munies chacune de faces de support situées côté extrémité,
la première et la deuxième partie support prenant appui sur des faces d'appui tournées l'une vers l'autre et les faces d'appui étant des faces hélicoïdales de même valeur de pas, mesurée par rapport à la direction axiale, de sorte qu'en cas d'une rotation des parties support, l'espacement de soutien axial est susceptible d'être modifié et la hauteur de pas des faces hélicoïdales n'est que d'une valeur telle qu'un autoblocage se produit entre les parties support en cas de charge axiale,
caractérisé en ce qu'entre la première partie support (2) et la deuxième partie support (4) est disposé un ressort de torsion (8) devant appliquer une précontrainte,
en ce que la première partie support (2) et la deuxième partie support (4) en position de base, lorsque l'espacement de réglage, entre les faces d'appui (3, 5) des parties support (2, 4), est minimal, sont reliées de façon assujettie en rotation et désolidarisable, par l'intermédiaire d'un dispositif d'actionnement (17), de manière que,
après l'introduction de l'élément support entre les deux composants (26, 27) à supporter et désolidarisation de la liaison entre les parties support (2, 4) au moyen du dispositif d'actionnement (17), le ressort de torsion (8) fait tourner les deux parties support (2, 4) dans le but de provoquer une augmentation de l'espacement de réglage axial, jusqu'à ce que les faces de support (6, 7) appuient sur les composants (26, 27).

2. Élément de support à réglage axial selon la revendication 1, caractérisé en ce que l'élément support (1) est configuré en forme de boîte, formée à partir d'un couvercle de boîte (2) cylindrique, faisant office de première partie support avec un filetage intérieur (3), et d'une partie inférieure de boîte (4) en forme de piston associée avec un filetage extérieur (5), qui est vissé dans le couvercle de boîte (2), la surface extérieure du couvercle de boîte formant la première face de support (6) et le fond de partie inférieure de boîte formant la deuxième face de support (7), et les pas du filetage intérieur (3) et du filetage extérieur (5) constituant les faces d'appui mutuelles.

3. Élément de support à réglage axial selon la revendication 2, caractérisé en ce que, dans la zone intérieure de l'élément support (1) en forme de boîte, est disposé un ressort spiral plan faisant office de ressort de torsion (8), dont les extrémités (9, 16) respectives sont chacune reliées à une partie support (2, 4), et ressort qui est placé sous précontrainte, tant dans la position de base, lorsque l'espacement de réglage est minimal, qu'également dans la position de réglage à espacement maximal possible.

4. Élément de support à réglage axial selon la revendication 3, caractérisé en ce qu'en partant de la paroi de fond de boîte (11) de la partie inférieure de boîte (4) un tourillon central (10) pénètre à travers une ouverture de guidage (12) correspondante, ménagée dans la paroi (13) du couvercle de boîte (2), la pénétration existant dans toutes les positions de réglage, et
en ce que le ressort spiral (8) s'étend autour du tourillon central (10) et est relié au tourillon central (10), par son extrémité intérieure (9).

5. Élément de support à réglage axial selon la revendication 4, caractérisé en ce que,
en partant de la paroi (13) du couvercle de boîte, une collerette de pourtour (15) pénètre dans la zone intérieure de l'élément de support (1) en forme de boîte, à hauteur du plan du ressort spiral, et
en ce que l'extrémité extérieure (16) du ressort spiral (8) est fixée sur la collerette (15).

6. Élément de support à réglage axial selon l'une des revendications 1 à 5,
caractérisé en ce que, sur une surface de support (6, 7) d'une partie support (2, 4) est disposé un dispositif de raccordement (31), de préférence des éléments à enclipsage, pour assurer la liaison à un composant (26) limitrophe.

7. Élément de support à réglage axial selon l'une des revendications 1 à 6,
caractérisé en ce que le dispositif d'actionnement (17) est un dispositif d'actionnement à distance.

8. Élément de support à réglage axial selon l'une des revendications 1 à 6,
caractérisé en ce que la liaison désolidarisable, entre les points support (2, 4) et le dispositif d'actionnement (17), est constituée par deux saillies (18) situées côté bordure, orientées en alignement, avec des fentes de logement (19) dans lesquelles est inséré un élément d'actionnement (20), constitué d'un organe de blocage (21) avec un point destiné à la rupture (22) et d'une bande de traction (23) raccordée, le point destiné à la rupture (22) se rompant pour une charge par traction de valeur prédéterminée et libérant les parties support (2, 4) afin de permettre une rotation mutuelle.

9. Élément de support à réglage axial selon la revendication 8, caractérisé en ce que, sur l'organe de blocage (21) de l'élément d'actionnement (20), le point destiné à la rupture (22) est formé par un amincissement du matériau, avec un élément à cisaillement (24) situé coté extrémité, connexe, faisant office de soutien sur une saillie (18) située côté bordure et une poignée (25), placée transversalement, étant formée d'un seul tenant sur la bande de traction (23), sur l'autre côté extrémité de l'élément d'actionnement (20).

10. Élément de support à réglage axial selon l'une des revendications 1 à 9,
caractérisé en ce que les composants à supporter, placés à distance l'un de l'autre, sont respectivement une traverse de pare-choc (27) et un revêtement de pare-chocs (30), et un ou plusieurs éléments support (1), faisant office d'éléments de réglage entre la face supérieure (28) de la traverse de pare-chocs (27) et la face inférieure voisine du revêtement de pare-chocs (30), pour offrir un soutien direct ou indirect, par l'intermédiaire de pièces intermédiaire (26).
